# EUROPEAN PATENT APPLICATION

(11) **EP 4 560 825 A1**
(43) Date of publication of application: **28.05.2025**
(21) Application number: 23794655.3
(22) Date of filing: 04.01.2023
(51) Int. Cl.: H01M 50/593, H01M 50/586, H01M 50/15, H01M 50/172, H01M 50/536

(54) **BATTERY INSULATOR, TOP COVER ASSEMBLY, AND BATTERY**

(30) Priority: 23.12.2022 CN 202223467244 U
(71) Applicant: Eve Power Co., Ltd., Jingmen, Hubei 448000 (CN)
(72) Inventor: SHU, Kuanjin, Jingmen, Hubei 448000 (CN); YUAN, Wei, Jingmen, Hubei 448000 (CN); ZHENG, Xu, Jingmen, Hubei 448000 (CN); HE, Xiaowu, Jingmen, Hubei 448000 (CN); HE, Wei, Jingmen, Hubei 448000 (CN)
(74) Representative: Regimbeau
(86) International application number: PCT/CN2023/070385
(87) International publication number: WO 2023/207217

(57) **Abstract**

Provided is a battery insulator, a top cover assembly, and a battery. The battery insulator includes a first member (1) and a second member (2). The first member (1) includes a first main body (11), an end of the first main body (11) facing towards the second member (2) is provided with two baffles (12) at intervals. The second member (2) includes a second main body (21), and an end of the second main body (21) facing towards the first main body (11) is provided with a mounting plate (22). The mounting plate (22) is provided with a first pole hole (221) in a penetrating manner, the first pole hole (22) is configured to allow a pole (4) of a battery to pass through, the mounting plate (22) is movably disposed between the two baffles (12), the mounting plate (22) and the two baffles (12) define an accommodation groove (111), and the accommodation groove (111) is configured to accommodate a tab (90) connected to the cell (9). The battery insulator adopts a split design, is simple in structure and has the low manufacturing cost so that the safety of the battery using the battery insulator can be improved.

## Description

The present disclosure claims priority to Chinese Patent Application No. 202223467244.X, filed with the China National Intellectual Property Administration (CNIPA) on Dec. 23, 2022, the disclosure of which is incorporated herein by reference in its entirety.

### TECHNICAL FIELD

The present application relates to the technical field of batteries, for example, a battery insulator, a top cover assembly, and a battery.

### BACKGROUND

In the production process of the battery, the pole piece on the cell is generally bent to form a tab, and then the tab is welded to the polar plate of the top cover assembly. However, the tab formed by bending has poor stability, the loose phenomenon easily occurs, which results in a short circuit due to the contact between the tab and a housing of the battery. Therefore, to prevent the tab from being in contact with the housing, a shielding portion is disposed on a plastic member between the cover plate and the cell so that the tab is insulated from the housing through the shielding portion. However, the related art has the following defects: the plastic member is integrally formed, the shielding portion is formed in an extended manner on the side of the plastic member facing towards the cell, and the shielding portion blocks a welding head of a welding device from extending to a welding position between a pole and the tab, thereby affecting the positioning and welding of the welding device on the pole, and further affecting the welding quality between the tab and the pole.

### SUMMARY

The present application provides a battery insulator, which is simple in structure and adopts a split design.

The present application further provides a top cover assembly, which is simple in structure and has high assembly efficiency.

The present application further provides a battery, which is simple in structure and has high safety.

In a first aspect, an embodiment of the present application provides a battery insulator. The battery insulator is disposed between a cover plate and a cell and includes a first member and a second member. The first member includes a first main body, and an end of the first main body facing the second member is provided with two baffles arranged at intervals. The second member includes a second main body, and an end of the second main body facing the first main body is provided with a mounting plate. A first pole hole penetrating through the mounting plate is configured to allow a pole of a battery to pass through, the mounting plate is movably disposed between the two baffles, the mounting plate and the two baffles define an accommodation groove, and the accommodation groove is configured to accommodate a tab of the cell.

In an embodiment, the mounting plate is slidably connected to the two baffles.

In an embodiment, one of each baffle or the mounting plate is provided with a sliding groove, the sliding groove extends in a length direction of the mounting plate, the other one of each baffle or the mounting plate is provided with a sliding block matching the sliding groove, and the sliding block is slidably disposed in the sliding groove.

In an embodiment, the sliding groove is disposed on the mounting plate. The mounting plate is provided with a first limiting portion. The first limiting portion is located at an end of the sliding groove away from the second main body in a length direction of the sliding groove. When the first limiting portion abuts against the sliding block, the first limiting portion is configured to limit a disengagement of the sliding block from the sliding groove.

In an embodiment, an end of the mounting plate away from the second main body is provided with a second limiting portion, a third limiting portion is disposed between the two baffles, the third limiting portion is spaced apart from the first main body, when a side surface of the second limiting portion away from the second main body abuts against a side surface of the third limiting portion adjacent to the first main body, the third limiting portion is configured to limit a movement of the mounting plate in a direction away from the first main body; and/or an end of the mounting plate facing the second main body is provided with a fourth limiting portion, when a side surface of the fourth limiting portion away from the second main body abuts against a side surface of the sliding block facing the second main body, the fourth limiting portion is configured to limit a movement of the mounting plate in a direction towards the first main body.

In an embodiment, a limiting strip is disposed on each baffle, the limiting strip and the sliding block are located on the same side surface of each baffle, and the limiting strip is disposed to face the mounting plate.

In a second aspect, an embodiment of the present application provides a top cover assembly. The top cover assembly includes a cover plate, a pole, a terminal and the battery insulator described above. The battery insulator and the terminal are located at two opposite sides of the cover plate respectively, a second pole hole corresponding to the first pole hole on the first member is disposed on the cover plate, a first end of the pole is connected to the tab, and a second end of the pole penetrates through the first pole hole and the second pole hole sequentially and is connected to the terminal.

In an embodiment, the pole includes a body and a polar plate, the polar plate is disposed within the accommodation groove and includes a first connection portion, a second connection portion and a fuse portion, the body is connected to the first connection portion, the tab is connected to the second connection portion, and the first connection portion and the second connection portion are connected through the fuse portion.

In an embodiment, the top cover assembly further includes an insulating sheet, the insulating sheet is disposed on a side surface of the polar plate away from the cover plate, and the insulating sheet covers at least a side surface of the first connection portion and the fuse portion away from the cover plate.

In an embodiment, a side surface of the mounting plate facing the polar plate is provided with a limiting protrusion, the polar plate is provided with a through hole, and the limiting protrusion is inserted into the through hole.

In an embodiment, a cross section of the body is rectangular, and a ratio of a long side to a short side of the body is X, where 1 < X < 10; or a cross section of the body is elliptical, and a ratio of a major axis to a minor axis of the body is Y, where 1 < Y < 10.

In a third aspect, an embodiment of the present application provides a battery. The battery includes a housing, a cell, and the battery insulator described above. The top cover assembly is disposed at an opening of the housing, the tab of the cell is connected to the pole, and the tab is located within the accommodation groove.

In an embodiment, a peripheral portion of the cover plate is provided with a step surface, the step surface abuts against an opening end of the housing, part of the cover plate is inserted into the housing, the cover plate has a thickness of H, and a distance between a side surface of the cover plate adjacent to the cell and the step surface is D, where D < 2/3H.

In an embodiment, the tab is provided with at least one bending portion.

The beneficial effects of the present application are as follows. The battery insulator is constituted by adopting a split design of the first member and the second member, which facilitates separate design and production of the first member and the second member, simplifies the structure, and reduces the manufacturing cost. The baffles are disposed on the first main body at intervals, the mounting plate is disposed on the second main body, the mounting plate is disposed between the two baffles to form the accommodation groove configured to accommodate the tab so that the tab is isolated from the housing of the battery to prevent the short circuit formed by the contact between the tab and the housing. Furthermore, in a process of assembling the battery using the battery insulator, the mounting plate is movably connected to the baffles, and the pole of the battery is disposed in and penetrates through the first pole hole; therefore, before the welding, the position where the mounting plate is provided with the first pole hole is pulled out from the two baffles, then after the tab of the battery is welded to the pole, the position on the mounting plate where the first pole hole is provided is pushed into the two baffles for assembly, avoiding the baffles of the first member from affecting the welding of the tab.

### BRIEF DESCRIPTION OF THE DRAWINGS

The present application will be described below in conjunction with the accompanying drawings and the embodiments.
FIG. 1 is a schematic structural diagram of a battery insulator according to an embodiment of the present application;
FIG. 2 is a schematic view of an extension of a first member and a second member according to an embodiment of the present application;
FIG. 3 is a partial enlarged view of A of FIG. 2;
FIG. 4 is a schematic structural diagram of a first member according to an embodiment of the present application;
FIG. 5 is a schematic structural diagram of a second member according to an embodiment of the present application;
FIG. 6 is a schematic structural diagram of a top cover assembly according to an embodiment of the present application;
FIG. 7 is a sectional view of a top cover assembly according to an embodiment of the present application;
FIG. 8 is a schematic exploded view of a top cover assembly according to an embodiment of the present application; and
FIG. 9 is a schematic structural diagram of a battery according to an embodiment of the present application.

### Reference list

- 1: first member
- 11: first main body
- 111: accommodation groove
- 112: code scanning window
- 12: baffle
- 121: sliding block
- 13: third limiting portion
- 14: limiting strip
- 2: second member
- 21: second main body
- 22: mounting plate
- 221: first pole hole
- 222: sliding groove
- 223: first limiting portion
- 224: second limiting portion
- 225: limiting protrusion
- 226: fourth limiting portion
- 3: cover plate
- 30: step surface
- 31: second pole hole
- 32: explosion-proof hole
- 4: pole
- 41: body
- 42: polar plate
- 421: first connection portion
- 422: second connection portion
- 423: fuse portion
- 4231: through hole
- 5: terminal
- 6: plastic member
- 7: insulating sheet
- 8: housing
- 9: cell
- 90: tab
- 91: bending portion

### DETAILED DESCRIPTION

In the description of the present application, terms "joined", "connected" and "fixed" are to be understood in a broad sense unless otherwise expressly specified and limited. For example, the term "connected" may refer to "securely connected", "detachably connected" or "integrated", may refer to "mechanically connected" or "electrically connected", or may refer to "connected directly", "connected indirectly through an intermediary" or "internal connection between two elements or interaction between two elements". For those of ordinary skill in the art, meanings of the preceding terms in the present application may be understood based on practical situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature between the first feature and the second feature. Moreover, the first feature being "on", "above" or "over" the second feature includes the first feature being directly on, above or over and obliquely on, above or over the second feature, or simply represents that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

In a production process of a battery, a pole piece on a cell is generally bent to form a tab, and then the tab is welded to a polar plate of a top cover assembly. However, the tab formed by bending has poor stability, the loose phenomenon easily occurs, which results in a short circuit due to the contact between the tab and the housing of the battery. Therefore, to prevent the tab from being in contact with the housing, a shielding portion is disposed on a plastic member between the cover plate and the cell so that the tab is insulated from the housing through the shielding portion. However, the plastic member in the related art is integrally formed, the shielding portion is formed in an extended manner on the side of the plastic member facing the cell; therefore, the shielding portion may affect the positioning and welding of a welding device on the pole, and further affect the welding quality between the tab and the pole.

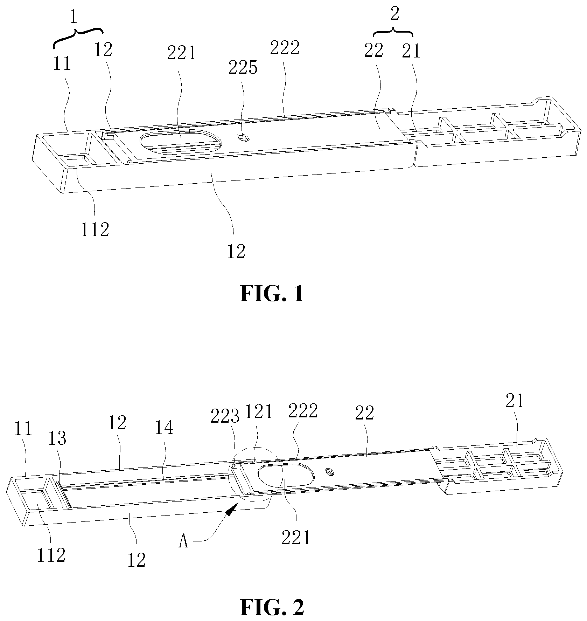

To solve the above-described problems, as shown in FIG. 1, FIG. 2 and FIG. 7, the present application discloses a battery insulator. The battery insulator includes a first member 1 and a second member 2. The first member 1 includes a first main body 11, an end of the first main body 11 facing the second member 2 is provided with two baffles 12 at intervals. The second member 2 includes a second main body 21, and an end of the second main body 21 facing the first main body 11 is provided with a mounting plate 22. A first pole hole 221 penetrating the mounting plate 22 is configured to allow a pole 4 of a battery to pass through, the mounting plate 22 is movably disposed between the two baffles 12, the mounting plate 22 and the two baffles 12 define an accommodation groove 111. A groove opening of the accommodation groove 111 faces towards the cell 9, and the accommodation groove 111 is configured to accommodate a tab 90 of the cell 9. The battery insulator is formed by adopting a split design of the first member 1 and the second member 2, which facilitates separate design and production of the first member 1 and the second member 2, simplifies the structure, and reduces the manufacturing cost. The baffles 12 are disposed on the first main body 11 at intervals, the mounting plate 22 is disposed on the second main body 21, the mounting plate 22 is disposed between the two baffles 12 to form the accommodation groove 111 configured to receive the tab 90; in this manner, the tab 90 is isolated from the housing 8 of the battery, and the tab 90 is prevented from being in contact with the housing 8 to form the short circuit. Furthermore, in the process of assembling the battery using the battery insulator, the mounting plate 22 is movably connected to the baffles 12, and the pole 4 of the battery is arranged to penetrate through the first pole hole 221; therefore, before the welding, a position where the mounting plate 22 is provided with the first pole hole 221 is pulled out from the two baffles 12, then after the tab 90 of the battery is welded to the pole 4, the position where the mounting plate 22 is provided with the first pole hole 221 is pushed into the two baffles 12 for assembly, avoiding the baffle 12 of the first member 1 from affecting the welding of the tab 90.

It is to be noted that, when the tab 90 is welded to the pole 4, the welding device is required to position a welding position of the pole 4; however, the baffles 12 are disposed on the battery insulator and affect the positioning of the welding device on the pole 4.

Optionally, the first member 1 and the second member 2 are made of an insulating plastic material. Apparently, in other embodiments, the first member 1 and the second member 2 may be made of other insulating materials.

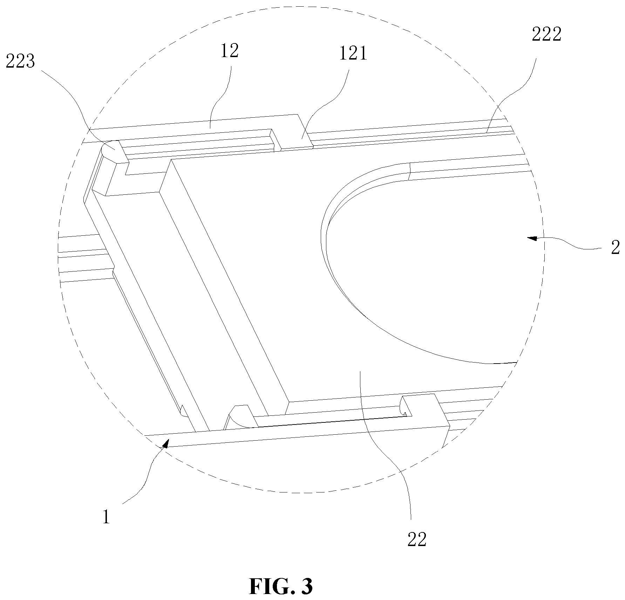

In this embodiment, as shown in FIGS. 2 and 3, the mounting plate 22 is slidably connected to the baffles 12, and the assembly efficiency of the sliding connection is relatively high, thereby facilitating the assembly between the first member 1 and the second member 2. In some embodiments, the mounting plate 22 is provided with a sliding groove 222, the sliding groove 222 extends in a length direction of the mounting plate 22, each baffle 12 is provided with a sliding block 121 matching the sliding groove 222, and the sliding block 121 is slidably disposed within the sliding groove 222, so that the sliding block 121 may limit the second member 2 and thus the second member 2 can slide relative to the first member 1. During use, the second member 2 may be pulled relative to the first member 1 in a length direction of the sliding groove 222, so that part of the mounting plate 22 exits from the two baffles 12. When the two baffles 12 are out from the position of the mounting plate 22 corresponding to the first pole hole 221, the pole 4 disposed on the first pole hole 221 is welded to the tab 90, the second member 2 is pushed to move in a direction towards the first member 1, so that the mounting plate 22 is completely inserted between the two baffles 12; thus, the assembly is completed without respectively splitting the first member 1 and the second member 2, and the operations are simple and efficient.

In some embodiments, the sliding groove 222 is disposed on the mounting plate 22, first limiting portions 223 are disposed at two opposite ends in the length direction of the sliding groove 222 on the mounting plate 22, and the first limiting portion 223 disposed on the mounting plate 22 is located at an end of the sliding groove 222 away from the second main body 21. When the first limiting portions 223 abut against the sliding block 121, the first limiting portion 223 may limit the disengagement of the sliding block 121 from the sliding groove 222, to prevent the first member 1 and the second member 2 from being completely separated during the pulling of the second member 2. It is to be understood that the sliding block 121 is limited by disposing the first limiting portions 223 on the mounting plate 22, so that the mounting plate 22 has the extreme position between the baffles 12. When the second member 2 is pulled to move to the extreme position in a direction away from the first member 1, the sliding block 121 abuts against the first limiting portions 223, and the first limiting portions 223 limit the sliding block 121 so that the second member 2 cannot continue to slide in the length direction of the sliding groove 222.

In some embodiments, the sliding block 121 includes a second connection portion and a guide portion. A first end of the connection portion is connected to an inner side wall of the baffle 12, a second end of the connection portion is connected to the guide portion, the sliding groove 222 is disposed on a side surface of the mounting plate 22 away from the groove opening of the accommodation groove 111, the guide portion is inserted into the sliding groove 222, and the guide portion may guide the mounting plate 22.

Optionally, sliding grooves 222 are disposed on two sides of the mounting plate 22 in a width direction, the sliding block 121 is disposed on each baffle 12, and each sliding block 121 is disposed within the respective sliding groove 222, so that the sliding stability of the mounting plate 22 is improved.

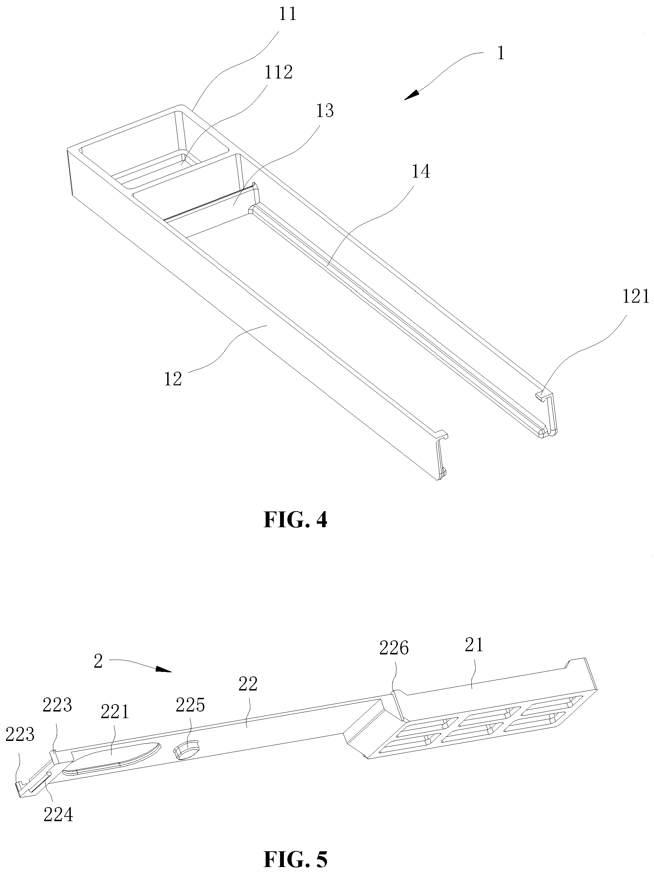

In some embodiments, as shown in FIG. 4, a limiting strip 14 is disposed on the baffle 12, the limiting strip 14 and the sliding block 121 are located on the same side surface of the baffle 12, and the limiting strip 14 is disposed to face the mounting plate 22. The limiting strip 14 and the sliding block 121 cooperate with each other so that the mounting plate 22 cannot be separated from the limiting of the two baffles 12 from a thickness direction of the first member 1. On the other hand, the limiting strip 14 extends in a length direction of the baffle 12 so that the limiting strip 14 may serve as a reinforcement strip to improve the strength of the baffle 12.

In an embodiment, the sliding groove 222 is concavely disposed on the inner side wall of the baffle 12, and part of the mounting plate 22 is inserted into the sliding groove 222, so that the structure is simple and the manufacturing is convenient.

In an embodiment, the sliding groove 222 is disposed on a side wall of the mounting plate 22, a guide block is disposed on a side wall of the baffle 12, and the guide block is disposed in the sliding groove 222.

In another embodiment, the first member 1 is rotatably connected to the second member 2.

In this embodiment, as shown in FIGS. 4 and 5, an end of the mounting plate 22 away from the second main body 21 is provided with a second limiting portion 224, a third limiting portion 13 is disposed between the two baffles 12, and the third limiting portion 13 is spaced from the first main body 11. Two opposite ends of the third limiting portion 13 are connected to the two baffles 12 respectively. When a side surface of the second limiting portion 224 away from the second main body 21 abuts against a side surface of the third limiting portion 13 adjacent to the first main body 11, the second limiting portion 224 may limit the movement of the mounting plate 22 in a direction away from the first main body 11. In an embodiment, an end of the mounting plate 22 facing the second main body 21 is provided with a fourth limiting portion 226, when a side surface of the fourth limiting portion 226 away from the second main body 21 abuts against a side surface of the sliding block 121 towards the second main body 21, the fourth limiting portion 226 may limit the movement of the mounting plate 22 in a direction towards the first main body 11. It is to be understood that the second member 2 moves towards the first main body 11, finally, the second limiting portion 224 abuts against the third limiting portion 13, and the fourth limiting portion 226 abuts against the sliding block 121 so that the second member 2 is locked, and the second member 2 cannot move in the length direction of the sliding groove 222 relative to the first member 1.

In some embodiments, the fourth limiting portion 226 and the second limiting portion 224 are located on two opposite side surfaces of the mounting plate 22 respectively.

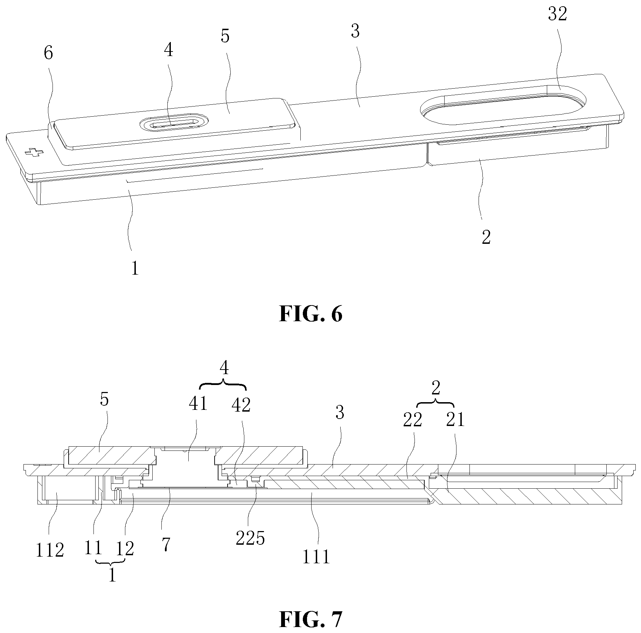

The present application further discloses a top cover assembly. As shown in FIGS. 6 to 8, the top cover assembly includes a cover plate 3, a pole 4, a terminal 5 and the battery insulator of any of the above-described embodiments. The battery insulator and the terminal 5 are located at two opposite sides of the cover plate 3 respectively, and a second pole hole 31 corresponding to the first pole hole 221 on the first member 1 is disposed on the cover plate 3. A first end of the pole 4 is connected to the tab 90, and a second end of the pole 4 sequentially penetrates through the first pole hole 221 and the second pole hole 31 and is connected to the terminal 5. The top cover assembly uses the battery insulator, the battery insulator is composed of the first member 1 and the second member 2, and the first member 1 is slidably connected to the second member 2, so that the mounting of the top cover assembly is convenient, and the mounting efficiency is high. It is to be understood that the terminal 5 is disposed on an outer side of the cover plate 3, the first end of the pole 4 is connected to the terminal 5, and the second end of the pole 4 sequentially passes through the first pole hole 221 and the second pole hole 31 to be connected to the tab 90 on the cell 9, so that the inside and outside of the battery using this top cover assembly are electrically conducted, and the power is supplied to a load device through the terminal 5.

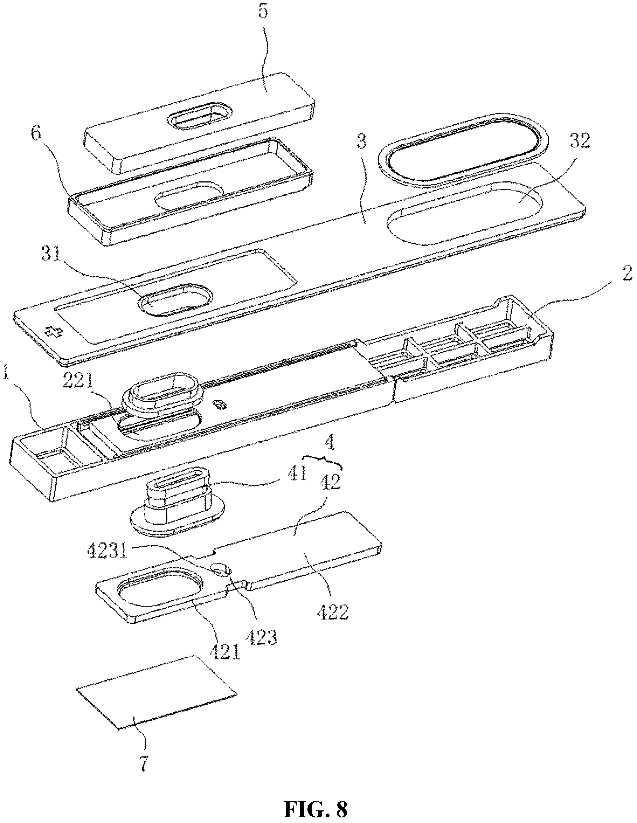

In some embodiments, as shown in FIG. 8, the pole 4 includes a body 41 and a polar plate 42. The polar plate 42 is disposed within the accommodation groove 111 and includes a first connection portion 421, a second connection portion 422 and a fuse portion 423. The body 41 is connected to the first connection portion 421, the tab 90 is connected to the second connection portion 422, and the first connection portion 421 is connected to the second connection portion 422 through the fuse portion 423. The fuse portion 423 has an over-current protection function. When the current on the polar plate 42 is excessively large, the fuse portion 423 may be fused firstly, so that the body 41 is disconnected from the tab 90, thereby protecting the whole battery and preventing the battery from being exploded due to an over-current phenomenon.

It is to be noted that, the over-current refers to an over current, which indicates that the current value exceeds a rated value. For example, the maximum output current of a regulated battery is 30 amperes (A). When an output current of the battery exceeds 30 A, the over-current phenomenon occurs.

In some embodiments, the polar plate 42 is provided with first grooves on two opposite sides of the fusion portion 423, and a distance between groove bottoms of the two first grooves is less than a width of the polar plate 42, so that a local weakened region is formed at a position of the fusion portion 423, and the weakened region has weaker current flow capacity than other positions of the polar plate 42. Therefore, if the current on the polar plate 42 is too large, the current cannot pass through the fusion portion 423, as a result, the fusion portion 423 is melted due to the increased temperature.

In an embodiment, the fusion portion 423 is provided with a through hole 4231 in a penetrating manner, and the through hole 4231 is located between the two first grooves. The first grooves and the through hole 4231 are disposed simultaneously at the position of the fuse portion 423 so that the area of the fuse portion 423 is smaller and the battery has a better protection effect against the over-current phenomenon.

In some embodiments, the top cover assembly further includes an insulating sheet 7, the insulating sheet 7 is disposed on a side surface of the polar plate 42 away from the cover plate 3, and the insulating sheet 7 covers at least a side surface of the first connection portion 421 and the fuse portion 423 away from the cover plate 3 so that insulation is formed between the first connection portion 421 and the tab 90 and between the fuse portion 423 and the tab 90, and thus the first connection portion 421 and the fuse portion 423 are prevented from being directly connected to the tab 90. In addition, the insulating sheet 7 may be used to prevent a molten liquid metal from falling out of the cell pack, when the fusion portion 423 is fused, the molten liquid metal is shielded by the insulating sheet 7, so short circuit and thermal runaway of the battery due to the molten liquid metal falling out of the cell pack are avoided.

To make the structure of the top cover assembly more compact, a side surface of the first connection portion 421 and the fuse portion 423 away from the cover plate 3 is a first side surface, a side surface of the second connection portion 422 away from the cover plate 3 is a second side surface, the first side surface and the second side surface are spaced apart in a thickness direction of the polar plate 42, the insulating sheet 7 abuts against the first side surface, and a side surface of the insulating sheet 7 away from the polar plate 42 is flush with the second side surface. In this design, a mounting position for mounting the insulating sheet 7 is formed on the first side surface, and when the insulating sheet 7 is mounted on the mounting position, the insulating sheet 7 does not partially protrude relative to the second connection portion 422.

In some embodiments, a side surface of the mounting plate 22 towards the polar plate 42 is provided with a limiting protrusion 225, a through hole 4231 is disposed on the polar plate 42, and the limiting protrusion 225 is inserted into the through hole 4231, so that the connection between the polar plate 42 and the second member 2, thereby preventing the second member 2 from loosening after the assembly of the top cover assembly is completed.

Optionally, when a cross section of the body 41 is rectangular, a ratio of a length to a width of a rectangle is X, and 1 < X < 10. When a cross section of the body 41 is elliptical, a ratio of a major axis to a minor axis of an ellipse is Y, and 1 < Y < 10. In this design, the torsion resistance of the pole 4 is ensured. The pole 4 is applied to a special-shaped battery, for example, a battery with a small width and a large length, and the size of the pole 4 within this range can ensure a connection area between the pole 4 and the terminal 5 or the load device.

To facilitate management after the battery is produced, an identification code is disposed on a side of the cover plate 3 towards the battery insulator, and the first main body 11 is provided with a code scanning window 112 corresponding to the identification code, so that an operator can perform code scanning verification on the identification code via the code scanning window 112 without separating the cover plate 3 from the battery insulator, which is simple in operation and reduces the effective space occupied by the identification code on the cover plate 3. For example, the identification code is a two-dimensional code or a barcode.

In this embodiment, two sets of top cover assemblies are provided, one set of top cover assembly is a positive top cover assembly, and the other set of top cover assembly is a negative top cover assembly.

In the positive top cover assembly, a plastic member 6 is disposed between the cover plate 3 and the terminal 5. The plastic member 6 is an insulating plastic member to form insulation between the terminal 5 and the cover plate 3 and prevent conduction between the terminal 5 and the cover plate 3. An explosion-proof hole 32 is disposed on the cover plate 3, a relief hole corresponding to the explosion-proof hole is disposed on the second main body 21, and an explosion-proof valve and an explosion-proof disc are disposed on the explosion-proof hole 32. When the internal pressure of the battery is too large, the explosion-proof valve is opened under pressure so that the gas inside the battery may be released from the relief hole. For example, six relief holes are disposed at intervals in the second main body 21.

In the negative top cover assembly, a liquid injection hole is disposed on the cover plate 3. After the assembly of the top cover assembly is completed, the electrolyte may be injected into the housing 8 through the liquid injection hole. In some embodiments, a second groove is disposed on a peripheral portion of the liquid injection hole to be around the outside of the liquid injection hole, and the second groove disposed on the peripheral portion of the liquid injection hole is used to replace a traditional sinking platform so that the problem of edge collapse of the sinking platform is solved. The plastic member 6 is disposed between the cover plate 3 and the terminal 5, and the plastic member 6 is a conductive plastic member, so the connection stability between the terminal 5 and the cover plate 3 is higher and the conductivity is better.

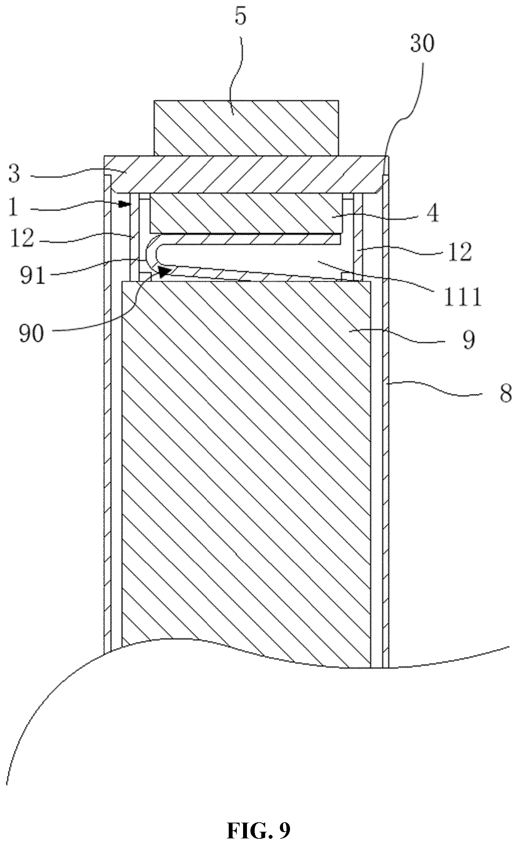

As shown in FIG. 9, the present application further discloses a battery. The battery includes a housing 8, a cell 9 and the top cover assembly described in any of the above-described embodiments. The cell 9 is disposed within the housing 8, the top cover assembly is disposed at an opening of the housing 8, the tab 90 of the cell 9 is connected to the pole 4, and the tab 90 is located within the accommodation groove 111. The battery adopts the above-described top cover assembly so that the tab 90 may be accommodated at the position of the battery insulator, that is, the baffle 12 separates the tab 90 from the housing 8 to prevent the short circuit formed by the tab 90 being connected to the housing 8. In addition, the first member 1 is slidably connected to the second member 2, during welding, the mounting plate 22 may be pulled out from the two baffles 12, and then the tab 90 is welded to the pole 4 through the welding device, to avoid the baffles 12 from affecting the welding device. After the pole 4 is welded to the tab 90, the mounting plate 22 may be pushed between the two baffles 12, and the operation is simple and efficient.

In some embodiments, a peripheral portion of the cover plate 3 is provided with a step surface 30, the step surface 30 abuts against an opening end of the cover plate 8, and part of the cover plate 3 is inserted into the housing 8.

In some embodiments, the cover plate 3 has a thickness of H, a distance between a side surface of the cover plate 3 adjacent to the cell 9 and the step surface 30 is D, and D < 2/3H. In this design, the strength of the connecting position of the cover plate 3 and the housing 8 is ensured.

In this embodiment, the tab 90 is provided with at least one bending portion 91, and the volume of the tab 90 is reduced by disposing the bending portion 91 on the tab 90 to facilitate the accommodation of the tab 90 within the accommodation groove 111. When the tab 90 is provided with only one bending portion 91, the tab 90 is bent in a C-shape. When the tab 90 is provided with two bending portions 91, the tab 90 is bent in a Z-shape. In some embodiments, three structures may be formed by bending the tab 90. The first structure is that the positive tab is bent in a C-shape, and the negative tab is bent in a Z-shape. The second structure is that the positive tab is bent in a Z-shape, and the negative tab is bent in a C-shape. The third structure is that both the positive tab and the negative tab are bent in a Z-shape. The bending combination of the tab is conducive to the welding between the tab 90 and the top cover after the cell pack is disposed in the housing.

In the description herein, it is to be understood that the orientational or positional relationships indicated by terms "above", "below", and the like are based on the orientational or positional relationships shown in the drawings, and are merely for ease of description and simplicity of operation, rather than indicating or implying that the referred device or element must have a specific orientation and be constructed and operated in a specific orientation.

In the description of this specification, the reference term "an embodiment" and the like mean that features, structures, materials, or characteristics described in connection with this embodiment are included in at least one embodiment or example of the present application. In this specification, schematic representations of the above-described terms do not necessarily refer to the same embodiment.

Furthermore, it is to be understood that although this specification is described in terms of embodiments, not each embodiment encompasses only one independent technical solution, but such description manner of this specification is merely for the sake of clarity and should be taken as a whole by those skilled in the art.

## Claims

1. A battery insulator, wherein the battery insulator is disposed between a cover plate (3) and a cell (9) and comprises a first member (1) and a second member (2), the first member (1) comprises a first main body (11), two baffles (12) are provided at an end of the first main body (11) towards the second member (2) and are arranged at intervals, the second member (2) comprises a second main body (21), a mounting plate (22) is provided at an end of the second main body (21) towards the first main body (11), the mounting plate (22) is provided with a first pole hole (221) penetrating through the mounting plate (22) and configured to allow a pole (4) of a battery to pass through, the mounting plate (22) is movably disposed between the two baffles (12), the mounting plate (22) and the two baffles (12) define an accommodation groove (111), and the accommodation groove (111) is configured to accommodate a tab (90) of the cell (9).

2. The battery insulator of claim 1, wherein the mounting plate (22) is slidably connected to the two baffles (12).

3. The battery insulator of claim 2, wherein one of each of the two baffles (12) or the mounting plate (22) is provided with a sliding groove (222), the sliding groove (222) extends in a length direction of the mounting plate (22), the other one of each of the two baffles (12) or the mounting plate (22) is provided with a sliding block (121) matching the sliding groove (222), and the sliding block (121) is slidably disposed within the sliding groove (222).

4. The battery insulator of claim 3, wherein the sliding groove (222) is disposed on the mounting plate (22), the mounting plate (22) is provided with a first limiting portion (223), the first limiting portion (223) is located at an end of the sliding groove (222) away from the second main body (21) in a length direction of the sliding groove (222), when the first limiting portion (223) abuts against the sliding block (121), the first limiting portion (223) is configured to limit a disengagement of the sliding block (121) from the sliding groove (222).

5. The battery insulator of claim 3, wherein a second limiting portion (224) is provided at an end of the mounting plate (22) away from the second main body (21), a third limiting portion (13) is disposed between the two baffles (12), the third limiting portion (13) is spaced apart from the first main body (11), when a side surface of the second limiting portion (224) away from the second main body (21) abuts against a side surface of the third limiting portion (13) adjacent to the first main body (11), the third limiting portion (13) is configured to limit a movement of the mounting plate (22) in a direction away from the first main body (11); and/or
a fourth limiting portion (226) is provided at an end of the mounting plate (22) facing the second main body (21), when a side surface of the fourth limiting portion (226) away from the second main body (21) abuts against a side surface of the sliding block (121) towards the second main body (21), the fourth limiting portion (226) is configured to limit a movement of the mounting plate (22) in a direction towards the first main body (11).

6. The battery insulator of claim 3, wherein a limiting strip (14) is disposed on each of the two baffles (12), the limiting strip (14) and the sliding block (121) are located on a same side surface of each of the two baffles (12), and the limiting strip (14) is disposed to face the mounting plate (22).

7. A top cover assembly, comprising a cover plate (3), a pole (4) and a terminal (5), wherein the top cover assembly further comprises the battery insulator of any one of claims 1 to 6, the battery insulator and the terminal (5) are located at two opposite sides of the cover plate (3) respectively, a second pole hole (31) corresponding to the first pole hole (221) on the first member (1) is disposed on the cover plate (3), a first end of the pole (4) is connected to the tab (90), and a second end of the pole (4) penetrates through the first pole hole (221) and the second pole hole (31) sequentially and is connected to the terminal (5).

8. The top cover assembly of claim 7, wherein the pole (4) comprises a body (41) and a polar plate (42), the polar plate (42) is disposed within the accommodation groove (111), the polar plate (42) comprises a first connection portion (421), a second connection portion (422) and a fuse portion (423), the body (41) is connected to the first connection portion (421), the tab (90) is connected to the second connection portion (422), and the first connection portion (421) and the second connection portion (422) are connected through the fuse portion (423).

9. The top cover assembly of claim 8, further comprising an insulating sheet (7), wherein the insulating sheet (7) is disposed on a side surface of the polar plate (42) away from the cover plate (3), and the insulating sheet (7) covers at least a side surface of the first connection portion (421) and the fuse portion (423) away from the cover plate (3).

10. The top cover assembly of claim 8, wherein a limiting protrusion (225) is provided at a side surface of the mounting plate (22) facing the polar plate (42), the polar plate (42) is provided with a through hole (4231), and the limiting protrusion (225) is inserted into the through hole (4231).

11. The top cover assembly of claim 8, wherein a cross section of the body (41) is rectangular, and a ratio of a long side to a short side of the body (41) is X, wherein 1 < X < 10; or
a cross section of the body (41) is elliptical, and a ratio of a major axis to a minor axis of the body (41) is Y, wherein 1 < Y < 10.

12. A battery, comprising a housing (8) and a cell (9) disposed within the housing (8), wherein the battery further comprises the top cover assembly of claim 7, the top cover assembly is disposed at an opening of the housing (8), the tab (90) of the cell (9) is connected to the pole (4), and the tab (90) is located within the accommodation groove (111).

13. The battery of claim 12, wherein a step surface (30) is provided at a peripheral portion of the cover plate (3), the step surface (30) abuts against an opening end of the housing (8), part of the cover plate (3) is inserted into the housing (8), the cover plate (3) has a thickness of H, and a distance between a side surface of the cover plate (3) adjacent to the cell (9) and the step surface (30) is D, wherein D < 2/3H.

14. The battery of claim 12, wherein the tab (90) is provided with at least one bending portion (91).
